(19) Europäisches Patentamt
European Patent Office
Office européen des brevets

(11) **EP 1 166 042 B1**

(12) **EUROPEAN PATENT SPECIFICATION**

(45) Date of publication and mention
of the grant of the patent:
**07.03.2007  Bulletin 2007/10**

(21) Application number: **00916581.2**

(22) Date of filing: **22.03.2000**

(51) Int Cl.:
**G01C 15/00** (2006.01)      **G01S 5/16** (2006.01)

(86) International application number:
**PCT/US2000/007504**

(87) International publication number:
**WO 2000/057133 (28.09.2000 Gazette 2000/39)**

(54) **CALIBRATION OF OPTICAL TRANSMITTER FOR POSITION MEASUREMENT SYSTEMS**

KALIBRATION EINES OPTISCHEN SENDERS FÜR POSITIONSMESSSYSTEME

ETALONNAGE D'EMETTEUR OPTIQUE DESTINE A DES SYSTEMES DE MESURE DE POSITION

(84) Designated Contracting States:
**CH DE FR GB IT LI**

(30) Priority: **22.03.1999  US 125545 P**
**13.10.1999  WOPCT/US99/23615**
**21.03.2000  US 532100**

(43) Date of publication of application:
**02.01.2002  Bulletin 2002/01**

(73) Proprietor: **Arc Second, Inc**
**Sterling, VA 20166 (US)**

(72) Inventors:
• **HEDGES, Thomas, M.**
**Sterling, VA 20166 (US)**
• **CASTEEL, Scott**
**Sterling, VA 20166 (US)**

• **CUFF, Thomas**
**Sterling, VA 20166 (US)**
• **PRATT, Timothy**
**Sterling, VA 20166 (US)**
• **SLATER, Rick**
**Sterling, VA 20166 (US)**
• **TODD, Donald**
**Sterling, VA 20166 (US)**

(74) Representative: **Merrifield, Sarah Elizabeth et al**
**Boult Wade Tennant**
**Verulam Gardens**
**70 Gray's Inn Road**
**London WC1X 8BT (GB)**

(56) References cited:
**GB-A- 2 213 673        US-A- 5 100 229**
**US-A- 5 247 487        US-A- 5 884 239**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

## BACKGROUND OF THE INVENTION

### 1. Field of the Invention

This invention relates in general to the field of position measurement and more particularly to an improved apparatus and method of providing position-related information.

### 2. Description of Related Art

A variety of techniques are known in the art to measure position, including land surveying techniques and global positioning satellite ("GPS") system techniques.

Many of these techniques are limited by high cost apparatus often due to the complexity of manufacturing complex devices with high precision and accuracy. Additionally, many of these techniques required extensive training, and therefore are not usable by those not trained in the art. GB-2 213 673 shows an optical position determining device in which calibration of the angular parameters of the fan beams is necessary.

It is an object of the present invention to provide an improved low cost optical transmitter which overcomes many of the problems associated with prior art position measurement systems.

It is a further object of the applicants' invention to provide improved simplified process for manufacturing a low cost stable optical transmitter useful in position measurement system.

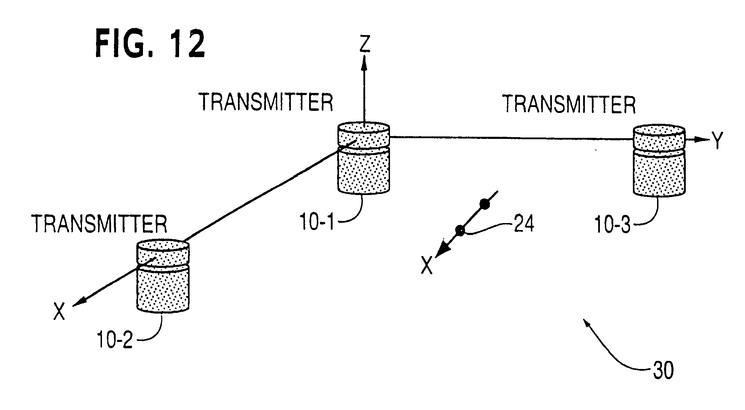

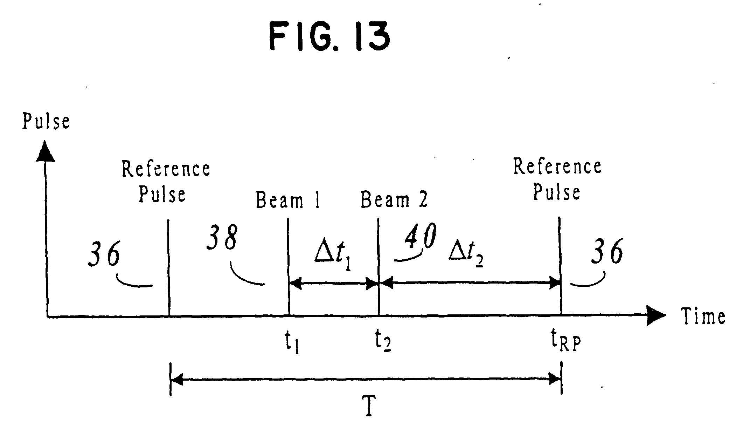

US 5,884,239 discloses a system for monitoring the position and orientation of an object within a measurement volume. At least 4 optical sensors are attached to the object being monitored. The 4 optical sensors must be non-coplanar. Once the 4 optical sensors have been attached to the object, a mathematical matrix is calculated that relates the positions of the 4 optical sensors relative to the object (column 9 lines 53-63). Once the matrix has been calculated, the system may be used to monitor the position and orientation of the object. The system includes a scanner that transmits two planar (fan-shaped) beams of light towards the optical sensors. In one embodiment, a horizontal plane of light is scanned vertically downwards, through the measurement volume containing the sensors. Then a vertical plane of light is scanned horizontally, from left to right, through the measurement volume containing the sensors. The horizontal and vertical planes of light are scanned at a substantially constant angular rate. Respective timers are used to determine the moments when the horizontal and the vertical planes of light strike each of the sensors are measured. These times can then be used to calculate the position and the orientation of the 4 optical sensors, and hence the position and orientation of the object. In order to provide synchronisation between the scanner and the timers, the scanner can either provide a synchronisation pulse or an additional light sensor can be provided at a fixed location within the measurement volume (column 7 lines 24-31). In other embodiments, angled planes of light are used instead of horizontal and vertical planes of light. In one embodiment, the scanner emits two planes of light, each angled at a predetermined angle relative to vertical, and these planes of light are rotated about a shared axis (Figure 13, column 13 lines 48-57, Figure 11).

## SUMMARY OF THE INVENTION

The system described in this disclosure contains, at a high level, several transmitters and a receiving instrument. The transmitters transmit signals from their stationary locations and the receivers receive these signals. In the present system, laser beams and LEDs are used as the signals. The receiving instrument then determines a coordinate system and calculates its position and assorted other information of interest from these received signals. The receiving instrument then displays the information through a user interface. The information may be, for example, the location of the receiving instrument or its distance relative to another location.

As is clear from the present disclosure, the present invention can be applied to a variety of different fields, applications, industries, and technologies. The present invention can be used, without limitation, with any system in which information related to position must be determined, including without limitation movement, dimensional measurement, and position and orientation tracking. This includes without limitation many different processes and applications involved in myriad industries. Some of these industries and some of their associated processes or applications are: film making (digitizing models, virtual sets, camera tracking, automatic focusing), construction (trades, power tools, surveying, CAD, equipment control, construction measurement and layout) robotics (robot calibration, work cell configuration, mobile robot navigation, hazardous waste excavation), law enforcement (accident scene mapping, crime scene mapping, incident reconstructions), computers (3D input devices, video games), virtual reality (augmented reality, virtual arcades, 3D Internet experiences), manufacturing (factory automation, facility decommissioning, parts inspection, facility maintenance, manufacturing tooling and inspection, manufacturing measurement), medical (surgical navigation, smart operating rooms, medical instrumentation), and defense (ordnance modeling, simulation training, aircraft fit-checks, ship retrofit and repair, site remediation).

Various figures are included throughout this disclosure to illustrate a variety of concepts, components of several subsystems, manufacturing processes, and assembly of several subsystems.

## 1. Transmitter

The present invention can be used in conjunction with the techniques and apparatus described in US patent 6 452 668. The following description in this section is intended to highlight certain features of US 6 452 668. Certain attached figures, including the "Rotor/Bearing Housing Assembly" figure, the "Laser Assembly" figure, and the "Asymmetric Pulse Effect" figure, provide additional detail. Additional figures also depict various (i) components of a transmitter, (ii) manufacturing processes for parts of a transmitter, and (iii) operational concepts, including beam fanning, tracking, and mathematics, which are related to a transmitter

### A. Simplified Optical Path

As is clear from US 6 452 668, one of the key advantages of the Arc Second transmitters is the simplification of the optical paths as exemplified by the lasers rotating with the head. Additionally, there is no window in the preferred transmitter. Therefore, there is no distortion introduced by the movement of the laser beam across a window. As described, the preferred embodiment utilizes a lens or other device which rotates with the laser. Thus, there is no distortion caused, for example, by variable window characteristics or angles of incidence or between a rotating lens and a fixed laser. The absence of a fixed window also simplifies manufacture, maintenance, and operation. The absence of a fixed window does require that a rotating seal be added to the transmitter.

### B. Speed of Rotation and Storage of Parameters

As is also described in US-6 452 668, the rotating head, and the lasers within it, rotate through a full 360 degrees at a constant, although configurable, velocity. Having an easily quantifiable center of rotation simplifies the algorithms for determining position and can simplify the set-up of the system. This determination is also simplified by the utilization of the synchronization signal which fires, in the preferred embodiment, once per revolution of the rotating head. For accuracy in a position measurement system, the angular velocity of the rotating head must not change during each revolution of the head.

The velocity of the rotating head is configurable through the use of, in the preferred embodiment, a field programmable gate array ("FPGA"). Such configurable speed control allows the transmitters to be differentiated by a receiver based on the transmitters' speed of rotation. The use of multiple transmitters, as is appreciated by those of ordinary skill in the art, enhances position detection. Other advantages are obtained through the use of programmable electronics (FPGAs, flash memory, etc). Not only can the desired speed be set by changing the clock to the phase locked loop which controls motor speed, but the overall gain of the control loop can be programmed to maximize performance at the velocity of interest.

### C. Beam Type and Number

[0014] As described in US 6 452 668 and known in the art, position detection is also enhanced by using multiple beams and controlling the shape of those beams. These beams may be in the same rotating head assembly or in separate rotating head assemblies.

Two beams is the preferred number per rotating head assembly, however, more beams can be used. In particular, another embodiment uses four beams, two for short range and two for long range. The two short-range beams should have fan angles as large as possible. This allows the user to operate near the transmitters, such as in a room. For long-range, the user would normally be operating away from the transmitters. Therefore, in that circumstance the vertical extent of the beams could be reduced to maximize the range of the system. The beams are, preferably, of type III laser. However, the rotation of the beams reduces their intensity to the fixed observer such that they can be classified as type I lasers. Safety features are integrated into the device to prevent the powering of the lasers when the rotating head is not in motion. In the preferred embodiment at least two interlocks are utilized. The first depends on the phase lock loop. The lasers are turned off until the system is in phase-lock for at least 1024 phase-clock-cycles (approximately 32 revolutions). The second is monitoring the absolute speed using the once-per-rev index on the encoder. A tolerance is programmed into the system, currently 1-part-in-1000. When the velocity is outside that window the laser is not allowed to operate.

D. Beam Shape

The Transmitter allows flexibility in setting beams for the application. One advantage is that the beam shape can be modified for the application. The key is that the beam shape should correspond with correctly filling the desired work volume. For construction trades this might be a room 20m x 20m x 5m in size. For construction machine control this might be a space 100m x 100m x 10m in size. By modifying the beam shape, the energy can be properly directed.

The beam shape can also be controlled to differentiate beams. This can be done for multiple beams on a given transmitter or on different transmitters. For a given transmitter, the first and second beams must be differentiated. One technique uses their relative position with respect to the strobe in time. Another technique is to assure that the beams have different widths ("beam width" or "divergence angle"). Then, for instance, the first beam could be the "larger" of the two beams.

Fanning the beam can be done using a variety of methods known in the art, including without limitation, rod lenses, pal lenses, and cylindrical lenses. The use of rod lenses offers a relatively simple approach, whereas the use of pal lenses offers greater control over the energy distribution. The beam typically is emitted from the source as a conical beam, then a collimating lens shapes the beam into a column, then the fanning lens fans the column.

Rod lenses can be used to increase control on divergence. One of the major advantages of rod lenses for line generation is that they do not directly affect the quality of the beam in the measurement direction (beam direction). Therefore, they should not affect the divergence of the laser beam as set by the collimating optics.

Pal lenses can be used to increase control of the energy distribution in the fan direction. PAL type lenses can even create "uniform" distributions, where the energy is uniform in the direction of the fan plane. A uniform distribution is often inefficient, however, if potential receivers are not uniformly distributed along the entire fan plane. In some implementations a focus must be created before the lens. In that implementation, the use of the PAL technique could affect the beam in the measurement direction.

Gaussian beams can also be used to maximize the performance of the receiver. Gaussian beams are symmetric beams in that the energy distribution across the divergence angle or beam width is symmetric. When a simple threshold technique is used in the receiver, it important that the pulses be symmetric and be without shoulders or sidelobes. It is also helpful if the distribution's shape does not change with range. There are several pulse shapes that meet many of these criteria. However, the Gaussian distribution meets all of these criteria. With symmetric pulses that do not have shoulders or sidelobes, the receiver will be able to detect the center of the beam. Non-symmetric pulses, conversely, can cause the receiver to falsely identify the exact time when the beam center intersects the receiver's optical detector.

E. Strobe

In a disclosed embodiment, the strobe pulse must be symmetric and pulse shaping in the flash/strobe pulse generator is required. With a simple thresholding technique, it is important that the strobe pulse be symmetric. A square pulse with equal rise and fall times is one desired pulse shape. The light output of the LEDs is directly to the current flowing through the LEDs. Because of the high currents involved in creating the strobe pulse, a pulse-forming network must be used to assure that the current is a square wave as it passes through the diodes. The ideal strobe pulse produces in the optical detector of the receiver a pulse shape identical to a laser pulse.

F. Communications and Control

A disclosed system uses a serial port for communication and control. This allows calibration data and control parameters to easily be transferred. Recall that the transmitters are differentiated by their speeds. Therefore a technique must be put in place to simplify the speed changes. Additionally, the transmitter parameters must be made available to the receiver. To create a simple, reliable, and unified technique the preferred embodiment uses serial communication between the transmitter and the receiver or test equipment. For test purposes, the serial connection is a well-known RS-232 connection. For used in the field, the connection is through an infrared serial port. This allows the transmitter to be sealed and yet communicate with the outside world. To avoid interference with the measurement technique, this port is only active when the lasers are off.

G. VHDL

Many of the digital designs of a disclosed embodiment are implemented in field programmable gate arrays (FPGAs). These devices allow complex designs to be programmed into general-purpose hardware available from multiple vendors. The programs for these devices are written in a special computer understandable language VHDL (VHSIC [very high-speed integrated circuit] Hardware Description Language). This is the same language that is used to design microprocessors and other semiconductor devices and is now standardized as IEEE 1076.

## H. Providing Power to the Laser Head

As explained in US 6 452 668, the motor and the provision of power to the rotating head assembly are key components of a transmitter according to the preferred embodiment.

A rotary transformer is used. Several techniques are available for powering devices in a rotating head. The most common is the use of slip rings. Unfortunately, slip rings require physical contact between the "brushes" and the "slip-ring". This creates dust in the system and can cause variations in motor speed a frictional torque varies. The preferred technique is to use a rotating transformer. The transformer technique causesminimal drag on the motor. Additionally, through the use of flat signal transformers as power transformers, the technique is very compact.

Fly-back control is used on the stator side of the transformer. To minimize the number of components in the rotating head, the voltage control is performed on the stator side of the transform. To optimize efficiency, a fly-back driving technique is utilized.

## I. Stability and Precision of Rotation

The stability of the speed control system and drive motoris also discussed in the incorporated application. As those of ordinary skill in the art will recognize, a sine wave drive motor is a low-cost motor with good inherent stability intra-revolution and, as such, is useful in ensuring constant velocity rotation.

The bearing separation should be maximized to achieve optimal results. Any precession and wobble (wow and flutter in a turntable) will be a source of error in the system. It will lead directly to an error in the "z" direction. Using two precision bearings and maximizing the distance between the bearings can minimize these errors.

The strobe pulses are triggered by a once-per-revolution indicator tied to the motor shaft. There are many ways to create this shaft position index. The simplest and preferred technique is to use the index normally supplied with an optical encoder. This separate output of the encoder is directly equivalent to a shaft position index.

The optical encoder disk is used to give rotation information. Other devices, including without limitation, tachometers and synchros could be used. The optical encoder disk is typically made of glass and has a series of radial marks on it which are detected as the disk rotates. Additionally, the disk typically has a single "index" mark of a different radius which is used to detect complete rotations. The disk system produces a square wave with a frequency dictated by the speed with which the radial marks are passing. For example, if the disk is rotating at 1 revolution/second, a 1000 mark disk system would produce a 1000 Hz square wave (1000 radial marks/revolution * 1 revolution/second = 1000 Hz).

The speed of the motor is controlled through a feedback phase-locked loop (PLL) system. The disk system square wave is one input and a clock from the transmitter system is the other input. The transmitter clock has a selectable frequency. The output of the PLL is used to control the speed of the motor rotation such that the PLL remains locked at the selected frequency.

The index mark of the disk can also be used to initiate the strobe pulse as often as once/revolution.

## J. Low Manufacture Cost

As more fully described in herein after regarding the calibration facility, a transmitter needs to be stable. Further, it is important for the receiving instrument to know, with precision, the operating parameters of the transmitter. The present manufacturing process for the transmitter specifies these operating parameters with less precision than that required by the receiving instruments. This allows the manufacturing process to be relatively inexpensive. The required precision is obtained in the characterization process, which utilizes the calibration facility described below.

## 2. Calibration

As discussed below the calibration facility explains the process of determining several key parameters of the transmitter. These parameters need to be provided to the receiving instrument in order to allow the receiving instrument to make the position calculations. Preferably, these parameters are stored in memory in the position calculation engine (PCE) and can be updated as required. For example, if a new transmitter is added to the system, then a new set of parameters needs to be loaded into the PCE. As an additional example, if the rotation speed of a transmitter is changed, then this information needs to be updated in the PCE.

## 3. Receiving Instrument

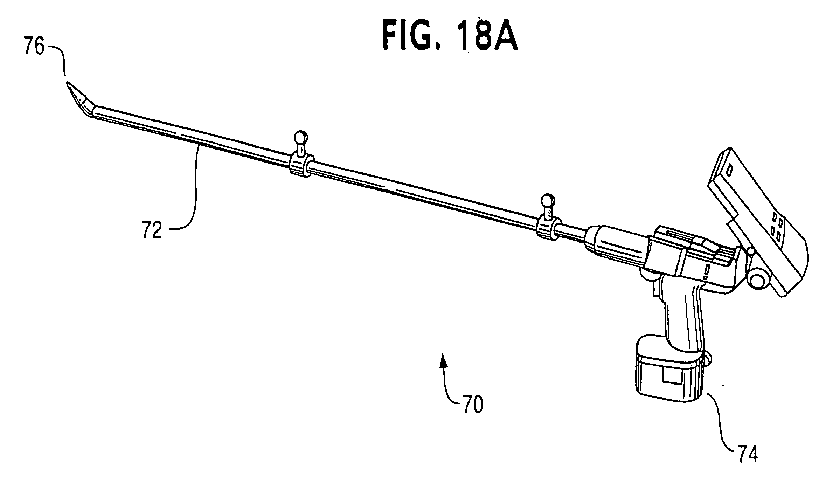

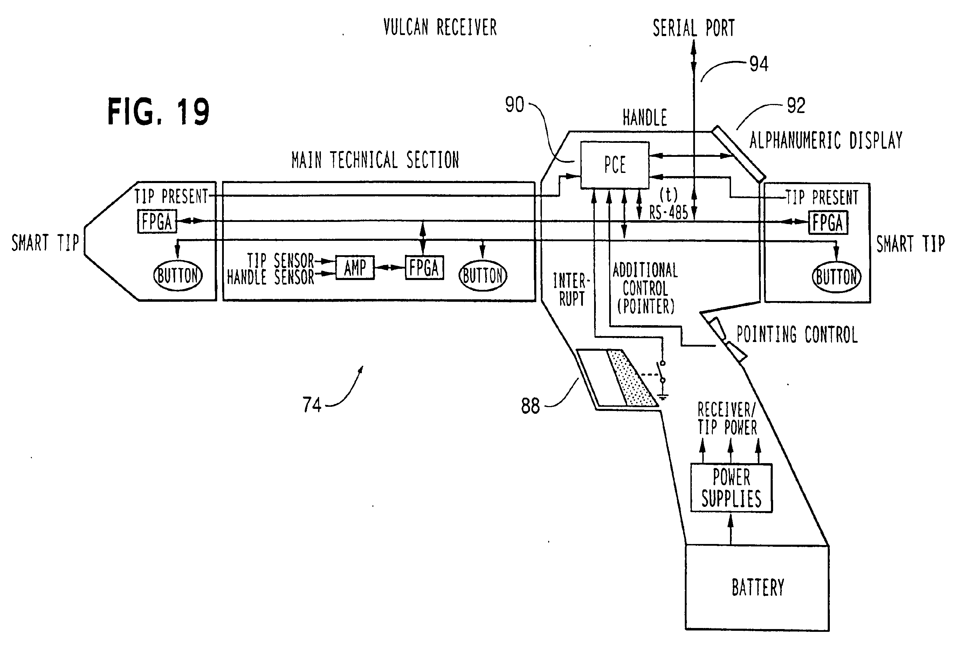

In the present system, the preferred receiving instrument is a wand, which is shown in Figure 18A known as a Walk-About Receiver, and one end of the wand contains a hand-held gun-shaped unit called the Vulcan Receiver, as shown in the Figure 19. Both of these instruments in earlier versions were commercially available from Arc Second, Inc.

of Dulles Virginia. The wand preferably contains two detectors/receivers.

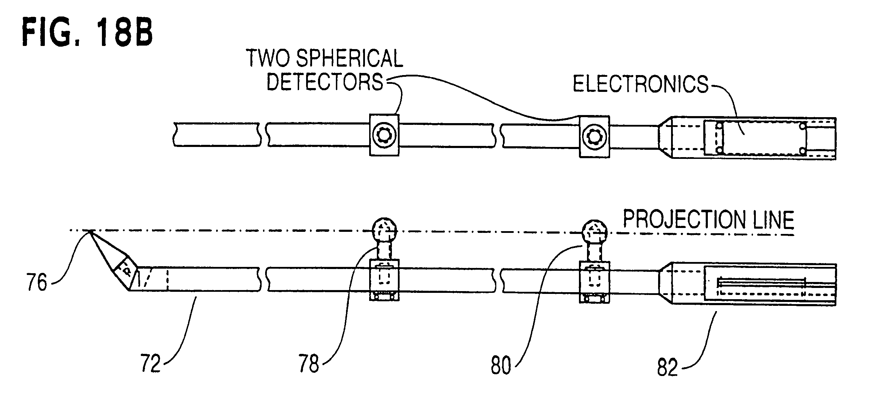

In the "Vulcan Receiver" Figure 18, there is shown a Position Calculation Engine ("PCE") which performs most of the computations of the receiving instrument. The PCE as herein after explained is integral in the set-up procedure, tracking, position calculation, and information display.

The Smart Tip can also perform computations, as indicated by the FPGA (field-programmable gate array) and the "i Button" in each Smart Tip. The Smart Tip can be present at either end in the present system and the signal "Tip Present" indicates whether there is a Smart Tip on each of the ends.

The wand provides a lightweight, mobile receiving instrument. Herein after there is a more detailed description of the operation of the wand as well as its configuration and the determination of the location of the wand tip.

## 4. Position Measurement Systems

As hereinafter explained, the mathematical description of the transmitter and its use in position determination are more fully explained and is a function performed primarily in the PCE.

In accordance with an aspect of the present invention, the functionality disclosed herein can be implemented by hardware, software, and/or a combination of both. Software implementations can be written in any suitable language, including without limitation high-level programming languages such as C++, mid-level and low-level languages, assembly languages, and application-specific or device-specific languages. Such software can run on a general purpose computer such as a 486 or a Pentium, an application specific piece of hardware, or other suitable device. In addition to using discrete hardware components in a logic circuit, the required logic may also be performed by an application specific integrated circuit ("ASIC"), a programmed programmable logic device ("PLD"), or other device. The system will also include various hardware components which are well known in the art, such as connectors, cables, and the like. Moreover, at least part of this functionality may be embodied in computer readable media (also referred to as computer program products), such as magnetic, magnetic-optical, and optical media, used in programming an information-processing apparatus to perform in accordance with the invention. This functionality also may be embodied in computer readable media, or computer program products, such as a transmitted waveform to be used in transmitting the information or functionality.

The principles, preferred embodiments, and modes of operation of the present invention have been described in the foregoing disclosure. The invention is not to be construed as limited to the particular forms disclosed, because these are regarded as illustrative rather than restrictive. Moreover, variations and changes may be made by those skilled in the art without departing from the scope of the invention as defined by the appended claims.

## Brief Description of the Drawings

The above described novel aspects of applicants' improved apparatus and methods for position measurements can be better understood with reference to the attached drawings, in which:

FIG. 1 is a pictorial view of applicants' improved optical transmitter contrasted with prior art laser spot beams;
FIG 2, FIG 2A and FIG 2B are a schematic top and section views illustrating the preferred embodiments of applicants' novel optical transmitter apparatus;
FIG. 3 is a block diagram of various novel calibration data means of applicants' improved optical transmitter for position location apparatus and methods;
FIG. 4 is a pictorial view of applicants' optical head assembly frame of reference;
FIG. 5 is a graphic representation of a fan beam according to applicants' improvements;
FIG. 6 is a graphic representation of a fan beam rotated about the x axis;
FIG. 7 is a graphic representation of a fan beam further rotated about the z axis;
FIG. 8 is a graphic representation of a plane of a fan beam intersecting a detector;
FIG. 9 is a graphic representation of the planes of two fan beams intersecting a detector;
FIG. 10 is a Cartesian plot of vectors representing intersecting fan beam planes;
FIG. 11 is a graphic representation of a single fan beam plane illuminating a detector;
FIG. 12 is a pictorial view of a three transmitter position measurement system embodying aspects of applicants' novel apparatus and method;
FIG. 13 is a linear time plot of a typical pulse sequence for applicants' improved optical transmitter and method;
FIG. 14 is a time plot of the pulse sequence during a single rotation of an optical transmitter in accordance with applicants' improved apparatus and method;
FIG. 15 is a graphical depiction of the pulses emitted during a single rotation of applicants' improved apparatus and method;
FIG. 16 is a top view of applicants' improved transmitter illustrating the preferred positioning of the transmitter front and the zero-azimuth plane of the improved transmitter.

FIG. 17A and 17B are schematic views of a calibration facility usable in accordance with aspects of applicants' invention.

FIG. 18A and 18B are perspective views of receiver/detector combinations utilized in accordance with applicants' inventions.

FIG. 19 is a block diagram of a position calculating system utilizable in accordance with applicants' inventions.


## Detailed Description of the Preferred Embodiments


## 1. The Transmitter


A. Physical Description


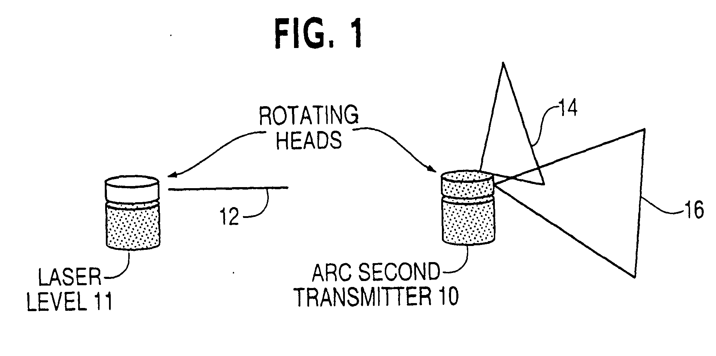

The Arc Second transmitter 10 is a device physically similar to a rotating laser 11 except that instead of a single rotating spot beam 12, the transmitter 10 emits *two* rotating *fan* beams 14 and 16 as shown in FIG 1.

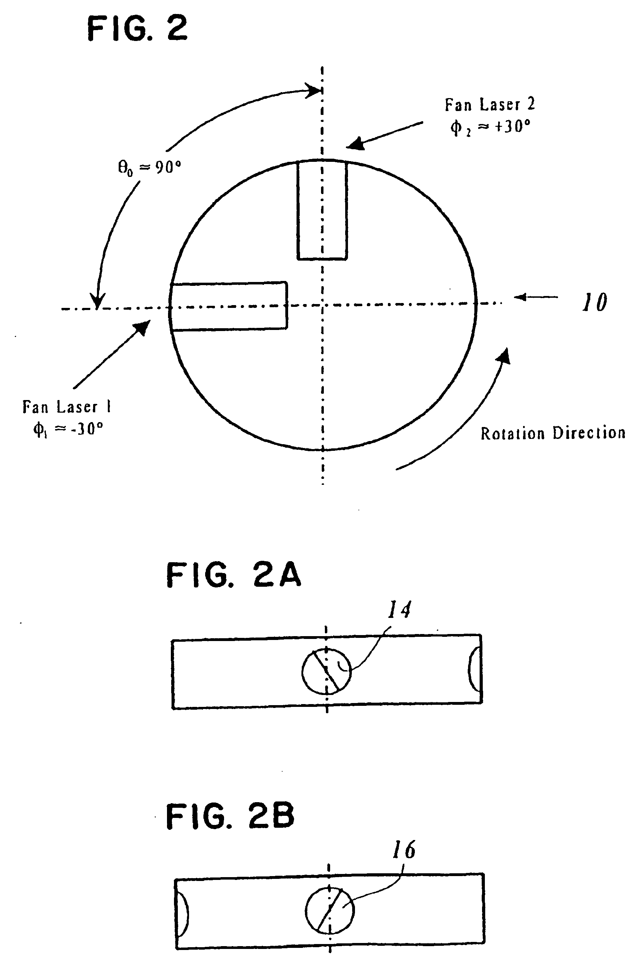

Figure 2 shows the preferred assembly of the transmitter head 10. There are three important angles in the figure: $\theta_{Off}$, $\phi$, and $\phi_2$. $\theta_{Off}$ describes the angular separation between the two laser modules in the rotating head as viewed from the top. The lasers are nominally spaced 90˚ apart. $\phi$, and $\phi_2$ describe the tilt of the fan plane of laser 1 and laser 2, respectively. These two angles are measured from vertical, and are nominally set to -30˚ for beam 1 and +30˚ for beam 2 as shown in the figure. We explain the sign convention for these angles in the next section. The actual values for $\theta_{Off}$, $\phi$, and $\phi_2$ are determined through a factory calibration process, which is described hereinafter.

As the transmitter head 10 rotates, it *scans* the measurement field more fully described hereafter with two planes of light 14 and 16. The measurement tool, not shown, is illuminated by each laser's fan plane exactly once during a rotation of the head. In addition to this scanning operation, the transmitter also fires an optical strobe at a fixed point in the head's revolution. The strobe illuminates the measurement tool and is used to provide a zero reference for the rotation of the head. This scanning process provides the basis for the measurements made by the receiver system and will be described in more detail hereinafter.

Finally, each transmitter in a position measurement system rotates at a known and unique rate. This unique rotational rate allows the software in the receiver system to differentiate between the transmitters surrounding the measurement volume.


B. Low Cost Transmitter Detailed Description


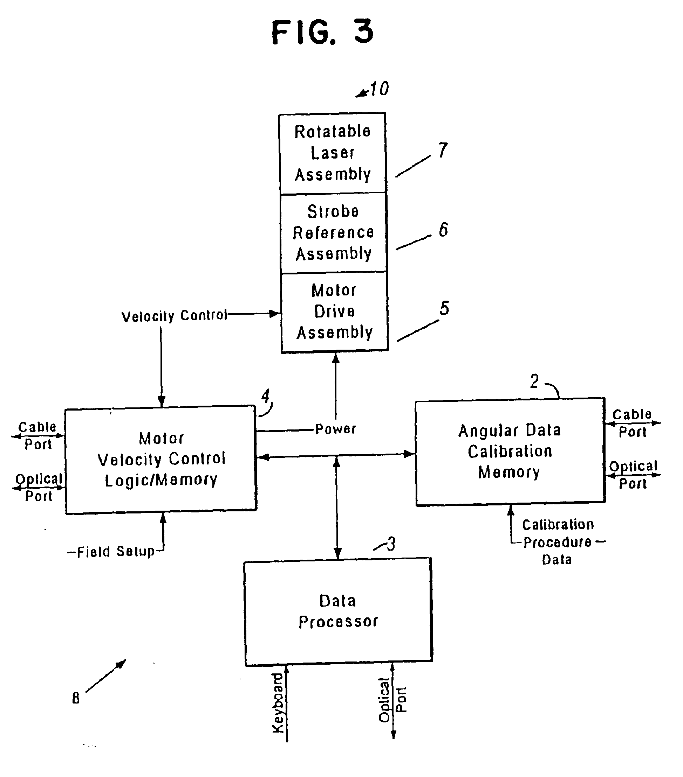

An improved, low cost optical transmitter useful in a three dimensional measurement system in accordance with several aspects of applicants' invention is illustrated in the logic block diagram of Fig. 3. Throughout the specification and drawings, like numerals are used to designate like elements.

In order to achieve a low cost optical transmitter and method, applicants' manufacturing process, as hereinafter will be more fully explained, utilize a calibration procedure during the manufacture/assembly process to generate unique data for characterizing each optical transmitter 10 rather than employing a much higher cost precision assembly process. In accordance with one aspect of applicants' invention the angular calibration data is generated during the manufacture/ assembly process to define the respective angles of each transmitter's first and second radiant fan beams and the angle between the beams when the transmitter is leveled for operation as more fully described in conjunction with Figs. 1 and 2. This angular calibration data is preferably stored in calibration data memory 2. In addition, data defining the desired rotational velocity can be preloaded during the manufacturing process and can likewise be loaded into calibration data memory 2 or variable motor control memory 4. As will hereinafter be more fully explained a receiver/detector 24 (see Fig. 12) distinguishes between radiant beams from a plurality of individual transmitters 10 operable within a single measurement field as a function of the alterable rotational velocity for each transmitter 10. As shown calibration data can be entered into memory 2 and memory 4 via a keyboard or optical port associated with data processor 3 which is coupled to memory units 2 and 4. Likewise calibration data from memories 2 and 4 can be outputted to the optical receiver/detector 24 in a measurement system via the cable or optical output ports of memory 2 and 4. As illustrated optical transmitter 10 includes a transmitter motor drive 5 and strobe reference and laser assemblies 6 and 7. As will be more fully explained hereinafter, when a transmitter 10 is introduced into a measurement system the calibration data for each transmitter 10 must be transferred to or loaded into a receiver 24 shown in Fig. 12. Further a field setup data port 8 of variable motor control memory 4 may be used to selectively alter the rotational velocity calibration data of the transmitter assembly and that velocity calibration data must likewise be communicated to the system receiver detector 24. This transfer may be accomplished either through the cable or optical ports of memories 2 or 4 or via the keyboard input of data processor 3.

C. Mathematical Description

A mathematical model will now be set forth that describes the physical scanning operation of the transmitter. We use this model in the next section to derive the position calculation algorithm.

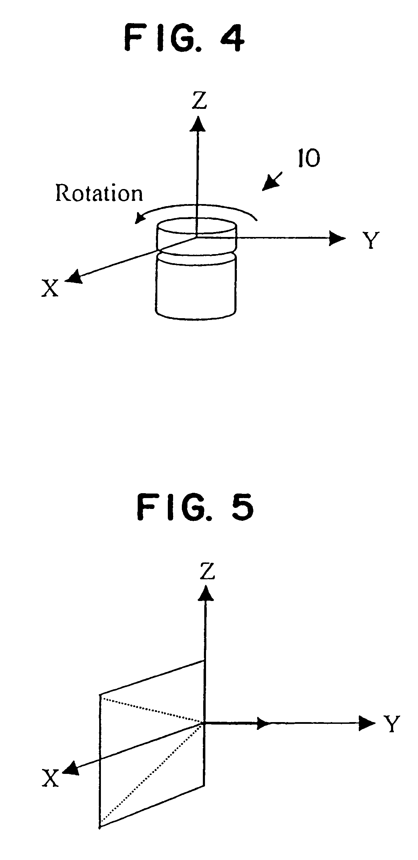

Physically, the scanning operation of the transmitter 10 is accomplished with two laser fan beams. The fan beams 14 and 16, see Fig 1 and 2, will be considered individually in the math model. To build this model, we first define the *transmitter's reference frame* as shown in Figure 4. Each transmitter has its own local reference frame, and these reference frames are different from the user's reference frame as will be explained hereinafter. These frames will be related to the user's reference frame hereinafter. As can be seen from Figure 4, the head rotates in the positive direction about the z-axis according to the right hand rule.

To describe the scan of a fan beam, we start with a vertical plane at y = 0, *i.e.* a plane in the x-z axis. Mathematically, the plane is represented by a vector normal to its surface. This plane corresponds to the plane of light created by a fan laser that is oriented vertically. In Figure 5 the plane is drawn as infinite, but in actuality the plane has a finite angular extent as shown by the dotted lines. This angular extent does not affect the math model, but it does impact the angular field of view of the transmitter.

$$\text{Plane defined by} \begin{bmatrix} 0 \\ 1 \\ 0 \end{bmatrix}$$

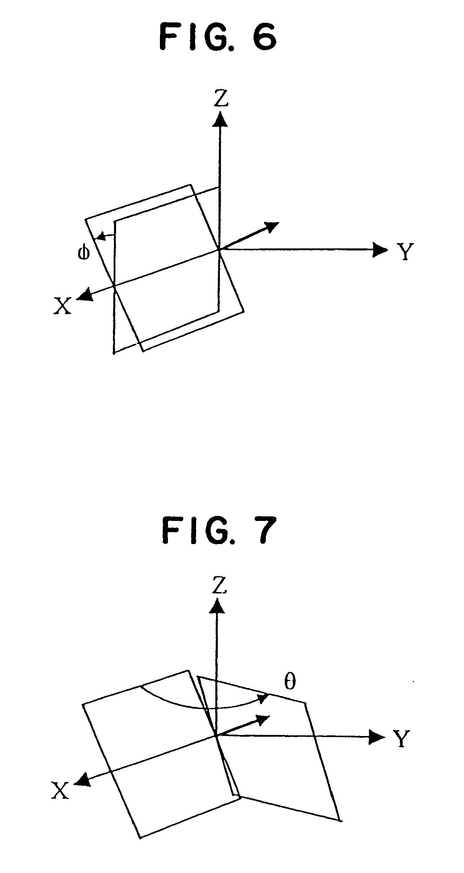

Next, we rotate this vertical plane about the x-axis by an angle $\phi$. This new plane represents a fan laser as inserted into the head of the transmitter. $\phi$ is the physical slant angle described in the previous section. A positive $\phi$ is a right-handed rotation about the x-axis, as shown in Figure 6.

$$\begin{bmatrix} 1 & 0 & 0 \\ 0 & \cos\phi & -\sin\phi \\ 0 & \sin\phi & \cos\phi \end{bmatrix} \begin{bmatrix} 0 \\ 1 \\ 0 \end{bmatrix} = \begin{bmatrix} 0 \\ \cos\phi \\ \sin\phi \end{bmatrix}$$

Finally, we rotate this new plane about the z-axis by an angle $\theta$. This angle is actually a function of time because it represents the location of the fan beam as the transmitter head 10 rotates about the z-axis, *i.e.* $\theta(t)$ is the scan angle at time t as shown in Fig. 7 and 13.

$$\begin{bmatrix} \cos\theta(t) & -\sin\theta(t) & 0 \\ \sin\theta(t) & \cos\theta(t) & 0 \\ 0 & 0 & 1 \end{bmatrix} \begin{bmatrix} 0 \\ \cos\phi \\ \sin\phi \end{bmatrix} = \begin{bmatrix} -\cos\phi\sin\theta(t) \\ \cos\phi\cos\theta(t) \\ \sin\phi \end{bmatrix}$$

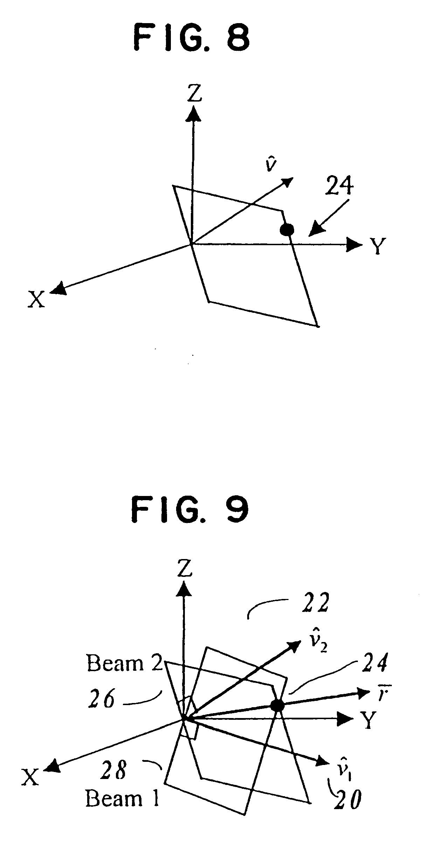

In the position calculation algorithm as hereinafter explained, this vector expression represents the laser fan plane at the point in time when it intersects the detector as shown in Figure 8. We call this vector expression $\hat{v}$.

$$\hat{v} \equiv \begin{bmatrix} -\cos\phi\sin\theta(t) \\ \cos\phi\cos\theta(t) \\ \sin\phi \end{bmatrix}$$

For each rotation of the transmitter head, the receiver system to be described herein after calculates two $\hat{v}$ vectors, $\hat{v}_1$ and $\hat{v}_2$, that describe the location of the two fan beams at their intersection point with the detector 24. Since $\phi$ is a constant determined through factory calibration, each $\hat{v}$ vector depends solely on its corresponding scan angle $\theta$,

which in turn depends on timing measurements made by the receiver system.

## 1. Position Calculation

There are two possible methods we can use to calculate the position of a detector 24 on the measurement tool: the theodolite network method and the *Arc Second non-theodolite transmitter method.* In the receiver system illustrated as 24 in Fig. 9, we use the Arc Second method because it is faster and more suited to the transmitter's unique design. We will briefly discuss the theodolite network method first before presenting the Arc Second method.

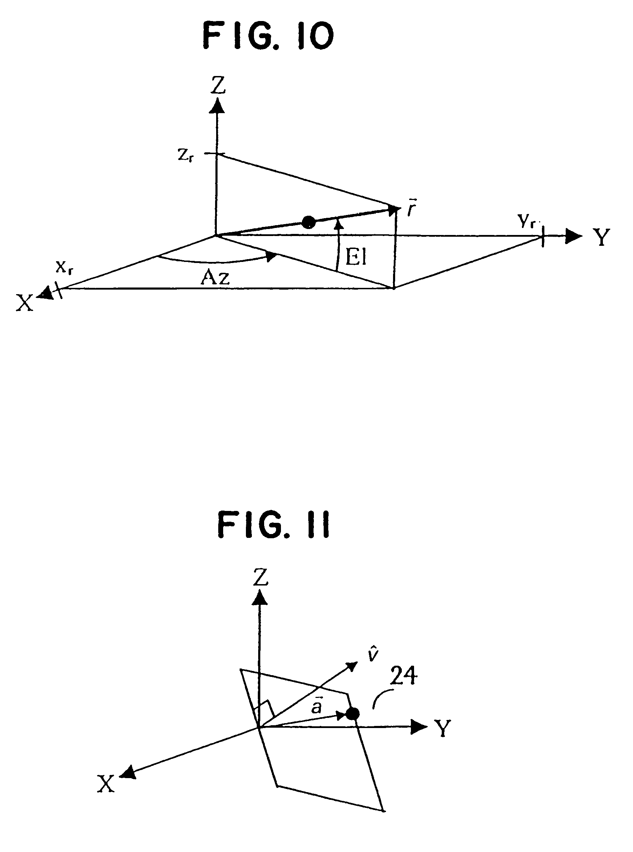

To use the theodolite network method, the receiver system would calculate the intersection between the measured azimuth-elevation vectors from each transmitter to the desired detector as illustrated in Figure 10.

Figure 9 shows both fan planes 26 and 28 at their point of intersection with the detector 24. The fan planes 26 and 28 intersect one another in a line, and this line is a vector $\vec{r}$ that passes through the detector 24:

$$\vec{r} = \hat{v}_1 \times \hat{v}_2$$

Again, while $\vec{r}$ passes through the detector 24, there is no information about the length of $\vec{r}$ from the vectors $\hat{v}_1$ and $\hat{v}_2$. Therefore, we can only calculate the azimuth and elevation of this vector relative to the transmitter's reference frame as shown in Figure 10 and expressed in the below equations:

$$az = tan^{-1}\left(\frac{y_r}{x_r}\right)$$

$$el = tan^{-1}\left(\frac{z_r}{\sqrt{x_r^2 + y_r^2}}\right)$$

Figures 9 and 10 illustrate the limitation of the theodolite method, i.e. it is only possible to determine two dimensions from a single transmitter. We can determine the two angles to the detector 24 but not the distance.

The next step in the theodolite network method is to calculate $\vec{r}$ vectors for all transmitters in the workspace and then calculate the intersection of these vectors. We will not present the mathematics for this method because it requires more calculations than Arc Second's position calculation algorithm and does not take advantage of Arc Second's unique transmitter design. However, in summary, if the baseline between the two theodolites and the angles to a receiver are known, the position of the sensor can be calculated.

In the Arc Second non-theodolite method, we take direct advantage of the transmitter's scanning operation, rather than treating the transmitters as theodolites. In Figure 11, we once again illustrate a single fan plane intersecting with the detector. Vector $\vec{a}$ is the detector's position relative to the transmitter's origin. From Figure 11 we may make the important mathematical observation:

$$\hat{v} \bullet \vec{a} = 0$$

The dot product is zero because these vectors are orthogonal to one another at the point when the beam plane intersects with the detector. The vector $\hat{v}$ is perpendicular to the plane by definition, and $\vec{a}$ is contained within the plane when the plane intersects the detector. As we illustrated in Figure 9, we have two fan planes represented by $\hat{v}_1$ and $\hat{v}_2$, so we actually have two equations per transmitter:

$$\hat{v}_1 \bullet \vec{a} = 0$$

$$\hat{v}_2 \bullet \vec{a} = 0$$

The vector $\vec{a}$ contains three unknowns, (x, y, z), so once again we do not yet have enough information to calculate the third dimension. Adding a third fan beam to the transmitter would add a third row to the equation, but this equation would not be linearly independent from the first two. Hence, we must add at least one additional transmitter.

In Figure 12, we have placed one transmitter 10-1 at the origin, a second 10-2 along the x axis, and a third 10-3 along the y axis. This axis setup is somewhat arbitrary but is used to show that the transmitters are tied together in a common reference frame. As previously discussed, we call this common frame the *user's reference frame* to differentiate it from the transmitters' reference frames described previously.

Since we wish to calculate the location of a detector in the user's reference frame, we need to specify each transmitter's reference frame in terms of the user's reference frame. This is accomplished with a location vector $\vec{p}_{tx}$ and a rotation matrix $R_{tx}$ for each transmitter. We can then re-write the equation as:

$$R_{tx}\hat{v} \bullet \left(\vec{p} - \vec{p}_{tx}\right) = 0$$

In this new equation, $\vec{p}$ is the location of the detector in the user's reference frame and is the value we wish to calculate. $R_{tx}\hat{v}$ is the vector describing the laser fan plane in the user's reference frame, whereas $\hat{v}$ itself describes the laser fan plane in the transmitter's reference frame. $\vec{p} - \vec{p}_{tx}$ is a vector from the transmitter's origin to the detector location in user's reference frame. For $n \geq 2$ transmitters, we have the following set of equations.

$$R_1\hat{v}_{1,1} \bullet \left(\vec{p} - \vec{p}_1\right) = 0$$
$$R_1\hat{v}_{1,2} \bullet \left(\vec{p} - \vec{p}_1\right) = 0$$
$$R_2\hat{v}_{2,1} \bullet \left(\vec{p} - \vec{p}_2\right) = 0$$
$$R_2\hat{v}_{2,2} \bullet \left(\vec{p} - \vec{p}_2\right) = 0$$
$$\vdots$$
$$R_n\hat{v}_{n,1} \bullet \left(\vec{p} - \vec{p}_n\right) = 0$$
$$R_n\hat{v}_{n,2} \bullet \left(\vec{p} - \vec{p}_n\right) = 0$$

The first subscript is the transmitter number and the second subscript on $\hat{v}$ is the laser beam number. In order to write this series of equations in matrix form so that we can solve for $\vec{p}$, we rearrange the equations as follows.

$$R_{tx}\hat{v} \bullet \left(\vec{p} - \vec{p}_{tx}\right) = 0$$

$$R_{tx}\hat{v} \bullet \vec{p} - R_{tx}\hat{v} \bullet \vec{p}_{tx} = 0$$

$$R_{tx}\hat{v} \bullet \vec{p} = R_{tx}\hat{v} \bullet \vec{p}_{tx}$$

$$\left(R_{tx}\hat{v}\right)^T \bar{p} = R_{tx}\hat{v} \bullet \bar{p}_{tx}$$

We note that $(R_{tx}\hat{v})^T$ is a 1 x 3 vector, $\bar{p} = \begin{bmatrix} x \\ y \\ z \end{bmatrix}$, and $R_{tx}\hat{v} \bullet \bar{p}_{tx}$ is a constant. We can then put the equations of these equations into the matrix form:

$$\begin{bmatrix} \left(R_1\hat{v}_{1,1}\right)^T \\ \left(R_1\hat{v}_{1,2}\right)^T \\ \left(R_2\hat{v}_{2,1}\right)^T \\ \left(R_2\hat{v}_{2,2}\right)^T \\ \vdots \\ \left(R_n\hat{v}_{n,1}\right)^T \\ \left(R_n\hat{v}_{n,2}\right)^T \end{bmatrix} \begin{bmatrix} x \\ y \\ z \end{bmatrix} = \begin{bmatrix} R_1\hat{v}_{1,1} \bullet \bar{p}_1 \\ R_1\hat{v}_{1,2} \bullet \bar{p}_1 \\ R_2\hat{v}_{2,1} \bullet \bar{p}_2 \\ R_2\hat{v}_{2,2} \bullet \bar{p}_2 \\ \vdots \\ R_n\hat{v}_{n,1} \bullet \bar{p}_n \\ R_n\hat{v}_{n,2} \bullet \bar{p}_n \end{bmatrix}$$

The shorthand matrix notation is:

$$A_{2n \times 3}\, \bar{p}_{3 \times 1} = \tilde{b}_{2n \times 1}$$

where the subscripts indicate the dimensions of the matrices. In order to calculate the detector's position in the user's reference frame, we simply solve this equation for $\bar{p}$. To do this, we can apply least-squares reduction to the matrix by multiplying both sides by $A^T$. We would then use a standard square-matrix solve such as LU decomposition to find $\bar{p}$. Alternatively, we could also use Singular Value Decomposition to solve for $\bar{p}$ directly. SVD is the preferred method for finding a least-squares solution when the matrix is ill-conditioned, which is a greater possibility when more transmitters are added.

## 2. Calculating the Scan Angles Using Timing Measurements

As previously discussed, the two $\hat{v}$ vectors from each transmitter 10 are based on the corresponding scan angles, $\theta_1(t)$ and $\theta_2(t)$, for the two laser fan beams 14 and 16 on the transmitter 10. We now discuss how the receiver system 24 (see Fig. 12) calculates these two scan angles. Specifically, to calculate position for a single detector, we need $\theta_1(t)$ and $\theta_2(t)$ for each transmitter in the workspace 30.

A typical receiver system, to be described hereinafter with reference to Figs 18A and 18B, includes a physical tool with a measurement tip and photodiode detector 24 circuitry, a Position Calculation Engine (PCE), and a user interface. As the user moves the tool around in the workspace 30, the photodiode detectors 78 and 80 receives electrical pulses or strikes every time one of the planes of light or one of the optical strobes illuminates a detector 24. Using a high-speed timer, not shown, which preferably is built into the PCE 90, the system makes differential timing measurements between pulses. These timing measurements are then used to calculate the scan angles.

Figure 13 illustrates a typical pulse sequence for a single rotation of the transmitter head 10. The time between reference pulses, as indicated by T, is the period of one transmitter head revolution. In Figure 13, the reference pulse 36 is preferably created by the optical strobe 6. The receiver system makes two differential timing measurements, $\Delta t_1$ and $\Delta t_2$, for each rotation of the transmitter head 10.

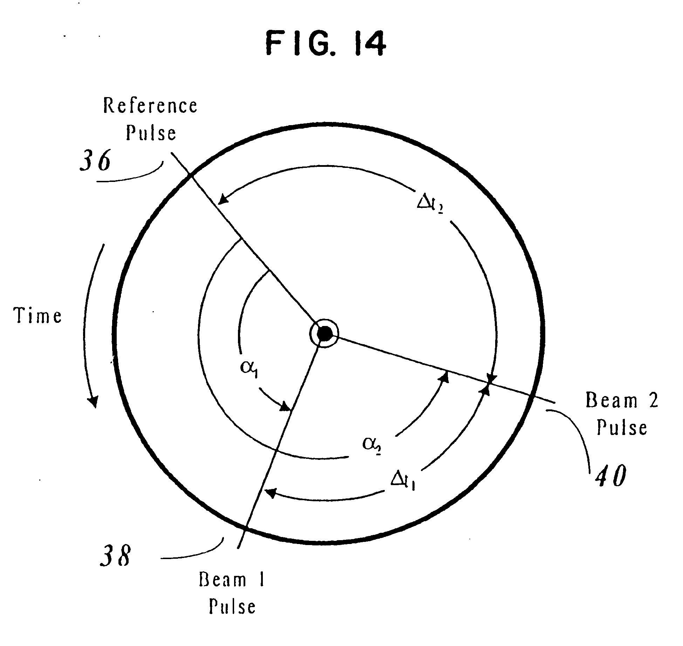

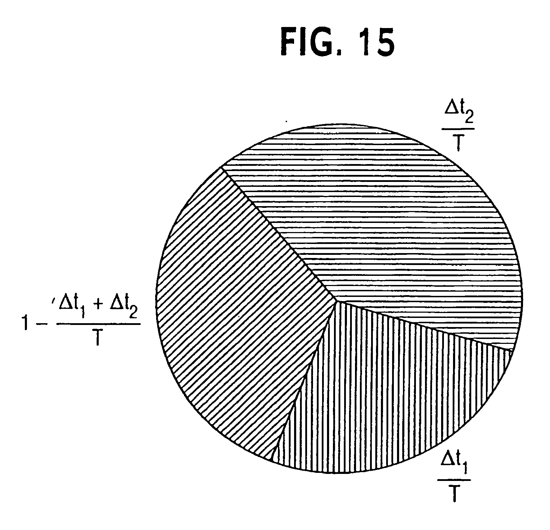

Figure 14 relates these pulse time differences to angular differences. We take the above plot in time and view it as a circle of $2\pi$ radians representing one revolution of the transmitter head. We define two angular measurements, $\alpha$ and $\alpha_2$, as the angle between the optical reference pulse and laser beam 1 and beam 2 pulses, respectively. The reader should not confuse this circle with the actual rotating transmitter head. This circle shows a plot in time and respective angle as viewed by the *detector*. Using the measured time intervals $\Delta t_1$ and $\Delta t_2$ and the fact that the transmitter completes one revolution in T seconds, we can calculate $\alpha$ and $\alpha_2$ by splitting the circle into percentages, as shown in Figure 15.

Using these percentages and the fact that there are $2\pi$ radians in a single head revolution, we get the following equations for $\alpha_1$ and $\alpha_2$:

$$\alpha_1 = 2\pi\left(1 - \frac{\Delta t_1 + \Delta t_2}{T}\right)$$

$$\alpha_2 = 2\pi\left(1 - \frac{\Delta t_1 + \Delta t_2}{T} + \frac{\Delta t_1}{T}\right) = 2\pi\left(1 - \frac{\Delta t_2}{T}\right)$$

Note that the reason the time intervals are measured from beam 1 rather than the reference pulse is to provide backward compatibility in the receiver system software for other versions of a transmitter; however this could be changed as desired.

For two important reasons, $\alpha_1$ and $\alpha_2$ are not exactly equivalent to the $\theta_1$ and $\theta_2$ angles described in the transmitter model above. First, in the model the two beams are not separated in azimuth. Rather, they scan together while overlapped as illustrated in Figure 9. In the actual transmitter, we separate the two beams azimuthally on the head so that the receiver system can differentiate between them. We define this angular separation $\theta_{Off}$ as described herein above. Therefore, we must subtract $\theta_{Off}$ from $\alpha_2$ to line $\alpha_2$ up with $\alpha_1$. As previously stated, $\theta_{Off}$ is determined through factory calibration.

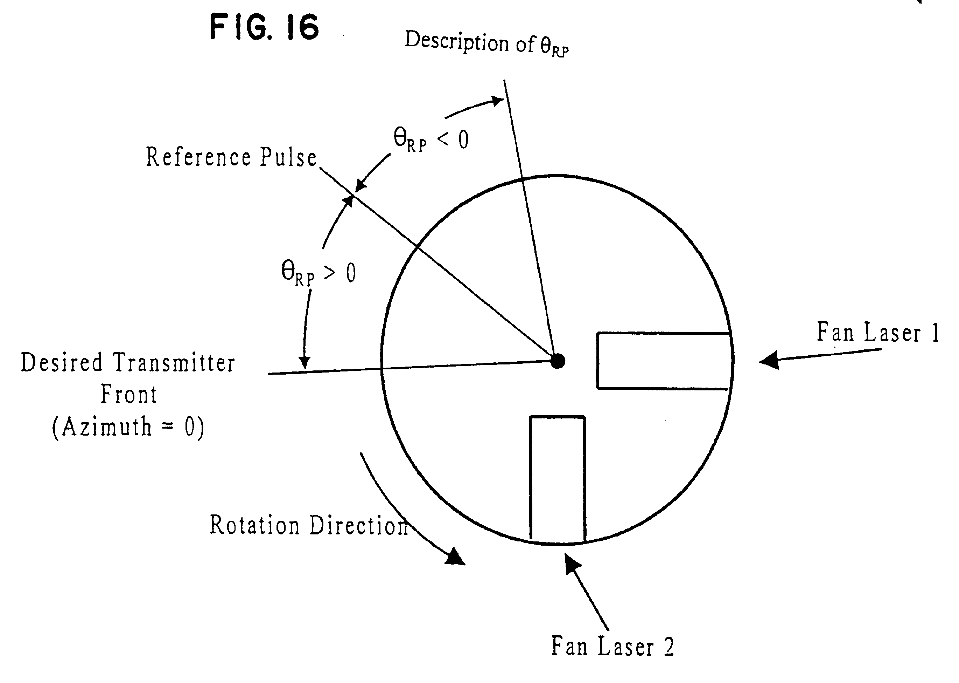

Second, the $\alpha_1$ and $\alpha_2$ angles are measured relative to the reference pulse as shown in Figure 14. If we relate this measurement to the transmitter model, then the *front* of the transmitter-its local x-axis-is the point in the head's rotation when the reference pulse 36 fires. Therefore, the reference pulse 36 also defines the zero-azimuth plane, since azimuth is measured from the transmitter's x-axis. If a single transmitter is to be used for azimuth and elevation calculations, it is sometimes desirable to set the point on the transmitter where the detector's azimuth will be zero. We establish this set point with a factory-calibrated constant called $\theta_{RP}$. As shown in Figure 16, $\theta_{RP}$ is the angular separation between the desired front of the transmitter and the occurrence of the reference pulse. The sign of $\theta_{RP}$ is determined as illustrated. For most transmitters, $\theta_{RP}$ is set to zero because azimuth-elevation measurements relative to a single transmitter are not required. Therefore, we convert $\alpha_1$ and $\alpha_2$ to the desired the scan angles, $\theta_1$ and $\theta_2$, by using the following two equations:

$$\theta_1 = \alpha_1 + \theta_{RP}$$

$$\theta_1 = 2\pi\left(1 - \frac{\Delta t_1 + \Delta t_2}{T}\right) + \theta_{RP}$$

$$\theta_2 = \alpha_2 + \theta_{RP} - \theta_{Off}$$

$$\theta_2 = 2\pi\left(1 - \frac{\Delta t_2}{T}\right) + \theta_{RP} - \theta_{Off}$$

To summarize, these equations are used to calculate $\theta_1$ and $\theta_2$ values for each transmitter that illuminates a detector 24. Therefore, if there are two transmitters set up in the workspace, four $\theta$ angles will be calculated for each detector, and hence four $\hat{v}$ vectors will be calculated. Three transmitters would result in six $\hat{v}$ vectors, and so on. Using all of the calculated $\hat{v}$ vectors, the receiver system then performs the matrix solve presented herein above for each detector 24 on the tool.

## 3. Transmitter Calibration Facility

For the improved ArcSecond three-dimensional measurement system to function, four transmitter 10 parameters must be supplied to the receiver 24:

1. The speed of the transmitter,
2. The angle of the first fan beam (Φ1)
3. The angle of the second fan beam (Φ2)
4. The angle between the beams when the transmitter is level (Θoff)

The user may adjust the speed of the transmitter 10 by controlling the phase-locked-loop motor controller schematically shown in FIG 3; however, the three angular parameters as described above are preferably supplied as part of the assembly or manufacturing process. Two options are available: (a) build the transmitter in a very precise manner such that the angles can be inferred from the manufacturing process, or (b) build the transmitter with reasonable precision and then determine the angles through a calibration process. The second approach is much more cost effective.
To generate the numbers the transmitter must be put into a calibration facility that has several critical characteristics:

1. The resulting calibration numbers must represent the dynamic, actual in-use parameters. This requirement forces the sensors 40, 42 and 44 to be some distance away from the transmitter, normally more than 1 meter.
2. The calibration facility must be simple to use. This requirement forces the development of transmitter mounting and centering techniques in addition to the use of gauge blocks to assure repeatable measurements
3. The calibration facility must measure the numbers with precision, specifically with a precision greater than one arcsecond. This requires the measurement to be done with precision and with sufficient averaging to meet the requirements. This also requires that measurements be done at +/- 180 degrees with respect to the transmitter to remove residual offset errors (similar to the well known process of "plunging the scope" used with theodolites).
4. The calibration facility must be "calibrated". In other words it is a requirement that the calibration of the facility be traceable to applicable national standards.

The calibration facility process preferred by applicant meets all of these difficult requirements.

## A. Detailed Description

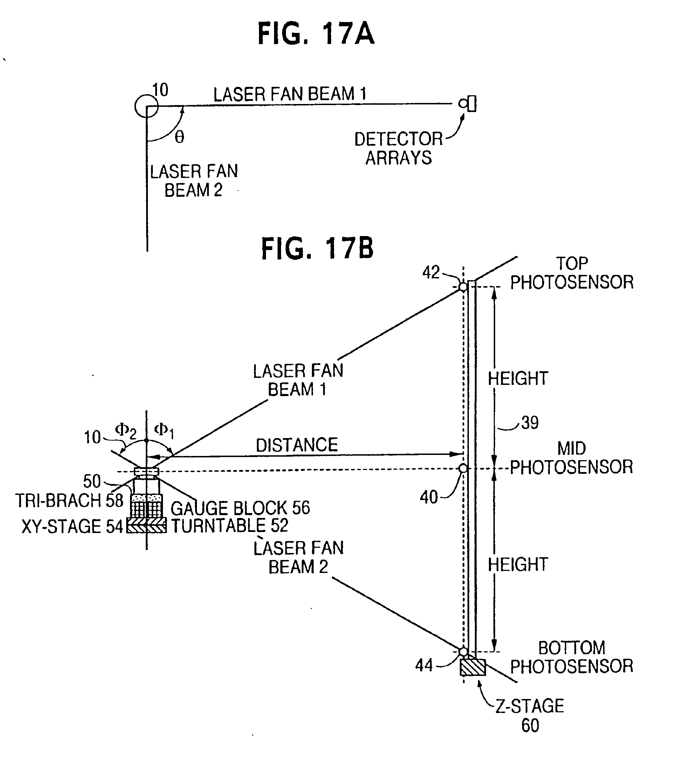

To meet all of the above requirements and based on our past experience, the calibration facility illustrated in Figure 17A and 17B was developed. It is well known that the best optical measurements can be accomplished with optical tables. These tables may be made of granite to provide stable measurement platforms. Optical supply companies, such as the Newport Corporation, have developed a reasonable substitution, optical bars. These bars are designed for building open structures that approach the measurement properties of optical tables. For our purposes, the bars, not shown, also provide the obvious advantage that they form an open frame. A design based on an optical table would not allow negative elevation angles to be measured easily in that the table would likely cause blockage. With the optical bars, both positive and negative elevation angles are easily accommodated. The optical bars also allow the facility to be large enough to meet the > 1meter requirement.
As shown in Figure 17B, the transmitter 10 is preferably mounted on top of a tower 50. The base of the tower is a turntable 52 that allows the entire tower to be rotated under computer control. The layer 54 above the turntable is a precision XY table that is used to center the transmitter. The next layer is a gauge block 56 that facilitates positioning the transmitter in the center of the measurement field. This block 56 allows transmitters of different height to be accommodated. The final layer is a tri-brach 58 adapter, as used in surveying. The adapter allows the transmitter to be tilted with precision using the screws at each of the three corners.
After the transmitter 10 is mounted it is aligned to the fixture using an optical level not shown. The level allows the center line of the lasers to be brought to the same level as the center detector 40 of the detector array. To facilitate this measurement, marks are preferably placed on both the rotating head of the transmitter and the array. If adjustments are needed, the vertical array may be moved using a z-adjustment-table 60 at the bottom of the array.
Dynamic centering of the transmitter's rotating head is preferably accomplished with two inductive probes not shown mounted 90deg with respect to each other. The system is designed so that the probes can be moved into position while the transmitter is rotating. If the transmitter is off center, the XY table 54 allows the proper adjustments.
After these adjustments the transmitters are ready for calibration. The detector array 39 is used to measure the time-strikes as the laser beams pass the array. At least three detectors 40,42,44 of array 39 are preferably used to properly measure the fan angle. Only two would be required in a perfect measurement system. The addition of the third detector compensates or accounts for residual misalignments. The measurements are accomplished using an oscilloscope as will be understood by those skilled in the art. The detectors are mounted with precision into the detector array. They are then surveyed in to determine their precise location. To minimize the offsets caused in the detectors, any windows are removed. The required precision is enhanced by optimizing the sampling rate of the scope and using the time delay function available in modern oscilloscopes. Averaging is used to meet the measurement accuracy requirements.

B. Calibration Software Algorithm

The intent of the calibration software is to analyze the digitized waveforms of the laser strikes across the photosensors, and determine the following specifications of the transmitter under test:

  1. The speed of the transmitter (Speed)
  2. The angle of the first laser fan beam ($\Phi_1$)
  3. The angle of the second laser fan beam ($\Phi_2$)
  4. The angle between the beams when the transmitter is level ($\Theta_{off}$)

All the needed parameters can be determined in 3 steps:

  1. Capture the waveforms from 2 laser beams on 3 photosensors in a vertical linear array.
  2. Measure the time differences of the center points of the lasers in relation to each other
  3. Calculate the desired angles as described hereinabove using these time measurements and the constant measured distances of the center of the transmitter to the mid photosensor and the top to bottom photosensor distance

The first step may be accomplished utilizing a commercially available digitizer with three channels running at 15 MHz or above. Each channel captures one full rotation of the transmitter; digitizing the laser one pulse, the laser two pulse and the following laser 1 pulse. All pulses from all channels must be referenced to the same point in time in order to determine the following correlating measurements.

  1. Determine the approximate time each laser strike occurs in the waveforms
  2. In order to get a more precise time measurement for each pulse, delay the oscilloscope by these approximate times to capture each laser pulse in 40ns resolution.
  3. Determine the relative time of each pulse center in relation to the other pulses

The second step requires the determination of the following times:

- topLaser1        = Top Sensor Laser1 time
- topLaser2        = Top Sensor Laser2 time
- topPeriod        = Top Laser 1 to Top Laser 1 time
- midLaser1        = Mid Sensor Laser1 time
- midLaser2        = Mid Sensor Laser2 time
- midPeriod        = Mid Laser 1 to Mid Laser 1 time
- lowLaser1        = Bottom Sensor Laser1 time
- lowLaser2        = Bottom Sensor Laser2 time
- lowPeriod        = Bottom Laser 1 to Bottom Laser 1 time
- Period        = (topPeriod + midPeriod + lowPeriod) / 3

The third step derives the above identified parameters with the measured distances

DISTANCE =    distance from center of transmitter at the laser's axis to the Mid Sensor
HEIGHT =    (distance from Top Sensor to Bottom Sensor) / 2
Top$\Phi_1$ =    -atan[(DISTANCE/HEIGHT) * sin((midLaser1 - topLaser1) * 2.0 * PI /Period)]
Top$\Phi_2$ =    -atan[(DISTANCE/HEIGHT) * sin((lowLaser1 - midLaserl) * 2.0 * PI / Period)]
Bottom$\Phi_1$ =    -atan[(DISTANCE/HEIGHT) * sin((midLaser1 - topLaser1) * 2.0 * PI / Period)]
Bottom$\Phi_2$ =    -atan[(DISTANCE/HEIGHT) * sin((lowLaser1 - midLaserl) * 2.0 * PI / Period)]

Speed =    l / Period
$\Phi_1$ =    $(Top\Phi_1 + Bottom\Phi_1) / 2$
$\Phi_2$ =    $(Top\Phi_2 + Bottom\Phi_2) / 2$
$\Theta_{off}$ =    (midLaser2 - midLaserl) / Period * 2 * PI

## 4. Low Cost Manufacturing

Preferably, the motor 65 is a brush-less sine wave drive motor. A sine wave drive motor, such as those found in VCRs, is a low-cost motor with good inherent intra-revolution stability and, as such, is useful in ensuring constant velocity rotation. The bearing separation should be maximized to achieve optimal results. Any precision and wobble, similar to wow and flutter in a turntable, will be a source of error in the system. It will lead directly to an error in the "z" direction. Using two precision bearings and maximizing the distance between the bearings can minimize these errors. The inertia of the rotating head also serves to maintain a constant angular velocity through each rotation.

The optical encoder disk is used to give rotation information. Other devices, including without limitation, tachometers and synchros could be used. The optical encoder disk is typically made of glass and has a series of 1000 radial chromium marks on it which are detected as the disk rotates. Additionally, the disk typically has a single "index" mark of a different radius which is used to detect complete rotations. The disk system produces a square wave with a frequency dictated by the speed with which the radial marks are passing. For example, if the disk is rotating at 1 revolution/ second, the disk system would produce a 1000 Hz square wave (1000 radial marks/revolution * 1 revolution/second = 1000 Hz).

The speed of the transmitter is controlled through a feedback phase-locked loop ("PLL") system. The disk system square wave is one input and a clock from the transmitter system is the other input. The transmitter clock has a selectable frequency. The output of the PLL is used to control the speed of rotation such that the PLL remains locked at the selected frequency. Using such a circuit, speed stability better than 1:200000 and up to 1:1000000 can be achieved. This would imply that for a rotation rate of 50Hz that the 1 sigma speed stability would be 100nSec for a speed stability of 1:200000.

As more fully described above regarding the calibration facility, the transmitter 10 needs to be stable. Further, it is important for the receiving instrument to know, with precision, the operating parameters of the transmitter 10. The present manufacturing process for the transmitter 10 specifies these operating parameters e.g. laser positioning and slant angles with less precision than that required by the receiving instruments 24. This allows the manufacturing process to be relatively inexpensive. The required precision is obtained in the calibration process, which utilizes the calibration facility described above.

## 5. Receiver/Detector

With reference to Figures 18A, 18B and 19, a typical receiver/detector 24 will be described. There are a number of types of optical receiver units which may be utilized with applicants' improved low cost optical transmitter 10 to form a position measurement system of the type shown schematically in Fig. 12. For further examples of other types of usable receiver/detector units reference may be had to U.S. Patent 5,247,487 or 5,110,202.

In the spatial position measurement system shown in Fig. 12, the receiver 24, which includes the data gathering apparatus, may comprise the portable wand-shaped receiver 70 shown in Fig. 18A, which is the Vulcan walk-around receiver hereinabove described. Receiver 70 includes a rod or wand-shaped section 72 and a handle section 74. Rod section 72 terminates in a sensor point 76 which is utilized to touch or contact a position within the measurement field for which x-y-z data is to be generated.

Referring now to Fig. 18B, the rod section 72 includes two spherically shaped, spaced apart optical detectors 78 and 80 and an electronics section 82. The proper alignment and positioning of the sensor point 76 with the detectors 78 and 80 can be mathematically expressed as:

$$\vec{P}_{TIP} = d_{TIP} \frac{\vec{P}_{DET2} - \vec{P}_{DET1}}{\left\| \vec{P}_{DET2} - \vec{P}_{DET1} \right\|} + \vec{P}_{DET2}$$

where:

$\vec{P}_{TIP}$ =    is the position of the tip 76

$\bar{P}_{DET2}$ =        = is the position of the detector 80 closest to the wand handle 82

$\bar{P}_{DET2}$ =        is the position of the detector 78 closest to the tip 76

$d_{TIP}$ =        is the distance 72 from detector-2 78 to the tip 76.

Proper alignment and spacing of the detector 78 and 80 relative to the sensor tip 76 along projection line 84 as shown in Fig. 18B is an important aspect of applicants' improved position measurement system as it permits a user, not shown, to take accurate measurements within a measurement field or space without having the receiver 24 positioned exactly perpendicular to a transmitter reference plane (See Fig. 12) or any particular user reference plane. In fact utilizing a wand tip 76 designed as hereinabove described permits a user to position the receiver/detector wand tip 76 and receiver/detector 24 without concern for any particular alignment.

Referring now to Fig. 19, the hand grip section 74 of portable receiver 70 of Fig. 18A will now be described. Receiver handle section 74 includes a trigger switch 88 to activate the receiver 70 to initiate x-y-z data generation in response to illumination of detectors 78 and 80 by two or more transmitters 10. This x-y-z position data may be generated when electric signals emanating from detector 78 and 80 activate or are inputted to an internal programmed computer 90. The x-y-z position data corresponding to position of the sensor point tip 76 when trigger 88 is activated. This position data may be displayed in a display panel 92 and/or transferred to another data processor, not shown, via output data port 94, as will be understood by those skilled in the data processing arts.

## INDUSTRIAL APPLICATION

As is clear from the present disclosure, the present invention can be applied to a variety of different fields, applications, industries, and technologies. The present invention can be used, without limitation, with any system in which information related to position must be determined, including without limitation movement, dimensional measurement, and position and orientation tracking. This includes without limitation many different processes and applications involved in myriad industries. Some of these industries and some of their associated processes or applications are: film making (digitizing models, virtual sets, camera tracking, automatic focusing), construction (trades, power tools, surveying, CAD, equipment control, construction measurement and layout), robotics (robot calibration, work cell configuration, mobile robot navigation, hazardous waste excavation), law enforcement (accident scene mapping, crime scene mapping, incident reconstruction), computers (3D input devices, video games), virtual reality (augmented reality, virtual arcades, 3D Internet experiences), manufacturing (factory automation, facility decommissioning, parts inspection, facility maintenance, manufacturing tooling and inspection, manufacturing measurement), medical (surgical navigation, smart operating rooms, medical instrumentation), and defense (ordnance modeling, simulation training, aircraft fit-checks, ship retrofit and repair, site remediation).

The preferred embodiment was chosen and described in order to best explain the principles of the invention and its practical application. The preceding description is intended to enable others skilled in the art to best utilize the invention in various embodiments and with various modifications as are suited to the particular use contemplated. The scope of the invention is defined by the following claims.

## Claims

1.  An optical transmitter (10) with an x-y-z position measurement system comprising an optical receiver (24), the optical transmitter (10) comprising:-

    at least one optical source operable to generate a pair of rotating substantially fan-shaped beams (14) about an axis of rotation (Z), wherein the plane of each fan-shaped beam is inclined relative to the axis of rotation (z);

    **characterised in that** the optical transmitter (10) comprises:

    a strobe (6) operable to generate an optical strobe pulse at a predetermined point in the rotation of said fan-shaped beams (14), wherein the strobe is operable to broadcast the optical strobe pulse for reception by an optical receiver (24) of the x-y-z position measurement system;
    a memory (2) associated with said transmitter (10) and storing calibration data specific to said transmitter (10) ; and uniquely defining predetermined angular parameters of said fan beams and
    a link (94) for communicating said calibration data from said memory (2) to said optical receiver (24), said optical receiver (24) being configured to receive said calibration data and said fan-shaped beams (14) so as to determine a position of said optical receiver (24).

2. An optical transmitter (10) according to claim 1, wherein the calibration data stored by the memory is indicative of the inclination ($\theta_1$) of the plane of the fan-shaped beams (14) relative to the axis of rotation; and said link comprises an output port for outputting the calibration data and thereby enabling the calibration data to be entered into an optical receiver (24) of the x-y-z position measurement system.

3. An optical transmitter (10) according to claim 1, comprising:

motor means (5) for rotating the fan-shaped beams (14) at a predetermined selectable velocity; and
velocity control means (4) for selectively controlling the motor means (5) to selectively alter the rotation of velocity of the fan-shaped beams (14).

4. An optical transmitter (10) according to claim 3, wherein the velocity control means (4) comprises a rotary transformer controllable by phase-locked loop feedback means.

5. An optical transmitter (10) according to claim 1 wherein the calibration data uniquely defines an angular separation between the fan-shaped beams (14, 16), and a vertical tilt angle for each beam.

6. An optical transmitter (10) according to claim 1, wherein the data calibration data includes a particular rotational velocity of the fan-shaped beams (14).

7. An optical transmitter (10) according to claim 1, wherein the optical strobe pulse defines a beginning reference for the rotation of the fan-shaped beams (14).

8. An optical transmitter (10) according to claim 4, wherein the velocity control means comprises a programmable logic gate array means.

9. An x-y-z position measurement system comprising: two or more optical transmitters (10) according to claim 1; and
an optical receiver (24) comprising:

an optical sensor for sensing the respective substantially fan-shaped beams (14) of the two or more optical transmitters (10);
timing means for determining the timings of the fan-shaped beams (14) sensed by the optical sensor;
calculation means for calculating the position of the optical sensor relative to the two or more optical transmitters (10) based on the timings of the fan-shaped beams (14);

**characterised in that** the optical receiver comprises:

an input port for receiving calibration data pertaining to the two or more optical transmitters (10),

wherein the input port is operable to receive calibration data indicative of the respective inclinations ($\theta_1$) of the fan-shaped beams (14); and **in that** the calculation means is operable to calculate the position of the optical sensor relative to the two or more optical transmitters (10), based on the calibration data in conjunction with the timings of the fan-shaped beams (14).

10. An x-y-z position measurement system according to claim 9,
wherein the two or more optical transmitters (10) each comprise a memory (2) and an output port as set out at claim 2, and
wherein the input port of the optical receiver is operable to communicate with the output ports of the optical transmitters (10) to receive calibration data from the optical transmitters (10).

**Patentansprüche**

1. Optischer Sender (10), der ein x-y-z-Positionsmeßsystem mit einem optischen Empfänger (24) umfasst, mit mindestens einer optischen Quelle, die so betrieben werden kann, dass sie zwei um eine Drehachse (2) rotierende, im Wesentlichen fächerförmige Strahlen (14) erzeugt, wobei die Ebene jedes fächerförmigen Strahls in Bezug auf die Drehachse (Z) geneigt ist,

**gekennzeichnet durch**

ein Stroboskop (6), das so betrieben werden kann, dass es an einem vorgegebenen Punkt der Drehung der fächerförmigen Strahlen (14) einen optischen Stroboskopimpuls erzeugt und dass es den optischen Stroboskopimpuls zum Empfang **durch** den optischen Empfänger (24) des x-y-z-Positionsmeßsystems sendet,

einen dem Sender (10) zugeordneten Speicher (2), in dem für den Sender (10) spezifische Kalibrierungsdaten gespeichert sind, die vorgegebene Winkelparameter der fächerförmigen Strahlen eindeutig definieren, und

eine Verbindung (94) zur Übertragung der Kalibrierungsdaten aus dem Speicher (2) an den optischen Empfänger (24), der so konfiguriert ist, dass er die Kalibrierungsdaten und die fächerförmigen Strahlen (14) zur Bestimmung der Position des optischen Empfängers (24) empfängt.

2. Optischer Sender (10) nach Anspruch 1, bei dem die im Speicher gespeicherten Kalibrierungsdaten die Neigung ($\theta_1$) der Ebene der fächerförmigen Strahlen (14) in Bezug auf die Drehachse angeben und die Verbindung einen Ausgangsanschluss zum Ausgeben der Kalibrierungsdaten und damit zum Ermöglichen der Eingabe in den optischen Empfänger (24) des x-y-z-Positionsmeßsystems umfasst.

3. Optischer Sender (10) nach Anspruch 1 mit
einer Motoreinrichtung (5) zum Drehen der fächerförmigen Strahlen (14) mit einer vorgegebenen, wählbaren Geschwindigkeit und
einer Geschwindigkeitssteuereinrichtung (4) zum selektiven Steuern der Motoreinrichtung (5) zum selektiven Verändern der Drehgeschwindigkeit der fächerförmigen Strahlen (14).

4. Optischer Sender (10) nach Anspruch 3, bei dem die Geschwindigkeitssteuereinrichtung (4) einen durch eine phasenstarre Regelkreisrückführeinrichtung steuerbaren Drehtransformator umfasst.

5. Optischer Sender (10) nach Anspruch 1, bei dem die Kalibrierungsdaten einen Winkelabstand zwischen den fächerförmigen Strahlen (14, 16) sowie einen vertikalen Neigungswinkel jedes Strahls eindeutig definieren.

6. Optischer Sender (10) nach Anspruch 1, bei dem die Kalibrierungsdaten eine bestimmte Drehgeschwindigkeit der fächerförmigen Strahlen (14) einschließen.

7. Optischer Sender (10) nach Anspruch 1, bei dem der optische Stroboskopimpuls eine Anfangsreferenz für die Drehung der fächerförmigen Strahlen (14) definiert.

8. Optischer Sender (10) nach Anspruch 4, bei dem die Geschwindigkeitssteuereinrichtung eine programmierbare logische Gattermatrixeinrichtung umfasst.

9. x-y-z-Positionsmeßsystem mit zwei oder mehr optischen Sendern (10) nach Anspruch (1) und
einem optischen Empfänger (24) mit
einem optischen Sensor zur Erfassung der jeweiligen, im Wesentlichen fächerförmigen Strahlen (14) der zwei oder mehr optischen Sender (10),
einer Taktgebereinrichtung zur Bestimmung der Takte der von dem optischen Sensor erfassten fächerförmigen Strahlen (14),
einer Berechnungseinrichtung zum Berechnen der Position des optischen Sensors in Bezug auf die zwei oder mehr optischen Sender (10) auf der Grundlage der Takte der fächerförmigen Strahlen (14),
**dadurch gekennzeichnet, dass** der optische Empfänger einen Eingangsanschluss zum Empfangen der die zwei oder mehr optischen Sender (10) betreffenden Kalibrierungsdaten umfasst, der so betrieben werden kann, dass er die Kalibrierungsdaten empfängt, die die jeweiligen Neigungen ($\theta_1$) der fächerförmigen Strahlen (14) angeben, und dass
die Berechnungseinrichtung so betrieben werden kann, dass sie auf der Grundlage der Kalibrierungsdaten im Zusammenhang mit den Takten der fächerförmigen Strahlen (14) die Position des optischen Sensors in Bezug auf die zwei oder mehr optischen Sender (10) berechnet.

10. x-y-z-Positionsmeßsystem nach Anspruch 9,
bei dem die zwei oder mehr optischen Sender (10) jeweils einen Speicher (2) und einen Ausgangsanschluss gemäß Anspruch 2 umfassen und
der Eingangsanschluss des optischen Empfängers so betrieben werden kann, dass er zum Empfangen der Kali-

**EP 1 166 042 B1**

brierungsdaten von den optischen Sendern (10) mit den Ausgangsanschlüssen der optischen Sender (10) kommuniziert.

**Revendications**

1. Emetteur optique (10) avec un système de mesure de position x-y-z comprenant un récepteur optique (24), l'émetteur optique (10) comprenant :

   au moins une source optique pouvant fonctionner de façon à générer une paire de faisceaux sensiblement en forme d'éventail (14) tournant autour d'un axe de rotation (Z), le plan de chaque faisceau en forme d'éventail étant incliné par rapport à l'axe de rotation (Z) ;

   **caractérisé en ce que** l'émetteur optique (10) comprend :

   un générateur d'impulsion de référence (6) pouvant fonctionner de façon à générer une impulsion de référence optique à un point prédéterminé de la rotation des faisceaux en forme d'éventail (14), le générateur d'impulsion de référence pouvant fonctionner de façon à diffuser l'impulsion de référence optique pour la réception par un récepteur optique (24) du système de mesure de position x-y-z;
   une mémoire (2) associée à l'émetteur (10) et stockant des données d'étalonnage spécifiques à l'émetteur et définissant sans ambiguïté des paramètres angulaires prédéterminés des faisceaux en forme d'éventail; et
   une liaison (94) pour transmettre les données d'étalonnage de la mémoire (2) au récepteur optique (24), le récepteur optique (24) étant configuré pour recevoir les données d'étalonnage et les faisceaux en forme d'éventail (14) de façon à déterminer une position du récepteur optique (24).

2. Emetteur optique (10) selon la revendication 1, dans lequel les données d'étalonnage stockées par la mémoire indiquent l'inclinaison ($\theta_1$) du plan des faisceaux en forme d'éventail (14) par rapport à l'axe de rotation; et ladite liaison comprend un port de sortie pour émettre les données d'étalonnage et permettre ainsi d'introduire les données d'étalonnage dans un récepteur optique (24) du système de mesure de position x-y-z.

3. Emetteur optique (10) selon la revendication 1, comprenant :

   un moyen à moteur (5) pour faire tourner les faisceaux en forme d'éventail (14) à une vitesse prédéterminée pouvant être sélectionnée; et
   un moyen de commande de vitesse (4) pour commander sélectivement le moyen à moteur (5) pour changer sélectivement la vitesse de rotation des faisceaux en forme d'éventail (14).

4. Emetteur optique (10) selon la revendication 3, dans lequel le moyen de commande de vitesse (4) comprend un transformateur tournant pouvant être commandé par un moyen d'asservissement à boucle de verrouillage de phase.

5. Emetteur optique (10) selon la revendication 1, dans lequel les données d'étalonnage définissent sans ambiguïté une séparation angulaire entre les faisceaux en forme d'éventail (14, 16), et un angle d'inclinaison par rapport à la verticale pour chaque faisceau.

6. Emetteur optique (10) selon la revendication 1, dans lequel les données d'étalonnage incluent une vitesse de rotation particulière des faisceaux en forme d'éventail (14).

7. Emetteur optique (10) selon la revendication 1, dans lequel l'impulsion de référence optique définit une référence de début pour la rotation des faisceaux en forme d'éventail (14).

8. Emetteur optique (10) selon la revendication 4, dans lequel le moyen de commande de vitesse comprend un moyen à réseau de portes logiques programmable.

9. Système de mesure de position x-y-z comprenant : deux, ou plus, émetteurs optiques (10) selon la revendication 1 ; et un récepteur optique (24) comprenant :

   un capteur optique pour détecter les faisceaux sensiblement en forme d'éventail (14) respectifs des deux, ou plus, émetteurs optiques (10);

19

un moyen de mesure de temps pour déterminer les conditions temporelles des faisceaux en forme d'éventail (14) détectés par le capteur optique;

un moyen de calcul pour calculer la position du capteur optique par rapport aux deux, ou plus, émetteurs optiques (10) sur la base des conditions temporelles des faisceaux en forme d'éventail (14);

**caractérisé en ce que** le récepteur optique comprend :

un port d'entrée pour recevoir des données d'étalonnage concernant les deux, ou plus, émetteurs optiques (10), le port d'entrée pouvant fonctionner de façon à recevoir des données d'étalonnage indiquant les inclinaisons respectives ($\theta_1$) des faisceaux en forme d'éventail (14); et **en ce que**

le moyen de calcul peut fonctionner de façon à calculer la position du capteur optique par rapport aux deux, ou plus, émetteurs optiques (10), sur la base des données d'étalonnage, conjointement aux conditions temporelles des faisceaux en forme d'éventail (14).

10. Système de mesure de position x-y-z selon la revendication 9,
dans lequel les deux, ou plus, émetteurs optiques (10) comprennent chacun une mémoire (2) et un port de sortie comme indiqué dans la revendication 2, et
dans lequel le port d'entrée du récepteur optique peut fonctionner de façon à communiquer avec les ports de sortie des émetteurs optiques (10) pour recevoir des données d'étalonnage provenant des émetteurs optiques (10).

# FIG. 1

ROTATING
HEADS

LASER
LEVEL 11

ARC SECOND
TRANSMITTER 10

EP 1 166 042 B1

# FIG. 2

Fan Laser 2
$\phi_2 \approx +30°$

$\theta_0 \approx 90°$

10

Fan Laser 1
$\phi_1 \approx -30°$

Rotation Direction

# FIG. 2A

14

# FIG. 2B

16

EP 1 166 042 B1

# FIG. 3

Rotatable Laser Assembly — 7
Strobe Reference Assembly — 6
Motor Drive Assembly — 5

Velocity Control →

Motor Velocity Control Logic/Memory — 4

Cable Port
Optical Port

Power

Angular Data Calibration Memory — 2

Cable Port
Optical Port

Calibration — Procedure — Data

—Field Setup—

Data Processor — 3

Keyboard

Optical Port

8

10

# FIG. 4

# FIG. 5

# FIG. 6

# FIG. 7

# FIG. 8

# FIG. 9

# FIG. 10

# FIG. II

# FIG. 12

EP 1 166 042 B1

TRANSMITTER

TRANSMITTER

TRANSMITTER

Z

Y

X

X

10-1

10-2

10-3

24

30

# FIG. 13

Pulse

Reference Pulse

Beam 1    Beam 2

Reference Pulse

$36$    $38$    $\Delta t_1$    $40$    $\Delta t_2$    $36$

$t_1$    $t_2$    $t_{RP}$    Time

$T$

EP 1 166 042 B1

# FIG. 14

Reference Pulse

36

Time

α₁

38

Beam 1 Pulse

Δt₂

α₂

Δt₁

Beam 2 Pulse

40

# FIG. 15

$$\frac{\Delta t_2}{T}$$

$$1 - \frac{'\Delta t_1 + \Delta t_2}{T}$$

$$\frac{\Delta t_1}{T}$$

# FIG. 16

Description of $\theta_{RP}$

$\theta_{RP} < 0$

Reference Pulse

$\theta_{RP} > 0$

Desired Transmitter
Front
(Azimuth = 0)

Fan Laser 1

Rotation Direction

Fan Laser 2

EP 1 166 042 B1

# FIG. 17A

10  LASER FAN BEAM 1                    ◁▯

θ                                DETECTOR
                                 ARRAYS

LASER FAN
BEAM 2

# FIG. 17B

42                                        TOP
                                          PHOTOSENSOR

LASER FAN
BEAM 1

                                          HEIGHT

                                          39

10  Φ₂  Φ₁      DISTANCE                   MID
                                          PHOTOSENSOR

50                                        40

TRI-BRACH 58    GAUGE BLOCK 56
XY-STAGE 54     TURNTABLE 52
                LASER FAN
                BEAM 2

                                          HEIGHT

                                          BOTTOM
44                                        PHOTOSENSOR

                                          Z-STAGE
                                          60

FIG. 18A

74

70

72

76

# FIG. 18B

TWO SPHERICAL
DETECTORS

ELECTRONICS

PROJECTION LINE

76

72          78          80          82

EP 1 166 042 B1

FIG. 19

VULCAN RECEIVER

SERIAL PORT

94

92

90

HANDLE

ALPHANUMERIC DISPLAY

MAIN TECHNICAL SECTION

PCE

TIP PRESENT

TIP PRESENT

FPGA

SMART TIP

(t)
RS-485

FPGA

SMART TIP

BUTTON

TIP SENSOR
HANDLE SENSOR

AMP

FPGA

BUTTON

BUTTON

INTER-
RUPT

ADDITIONAL
CONTROL
(POINTER)

74

88

POINTING CONTROL

RECEIVER/
TIP POWER

POWER
SUPPLIES

BATTERY

EP 1 166 042 B1